# FASCICULE DE BREVET EUROPEEN

(11) **EP 2 329 501 B1**
(45) Date de publication et mention de la délivrance du brevet: **07.01.2015**
(21) Numéro de dépôt: 09752432.6
(22) Date de dépôt: 30.09.2009
(51) Int. Cl.: G21F 5/14, B66C 13/08, B66C 1/62, B66C 1/10

(54) **ENSEMBLE DE MANUTENTION POUR CONTENEUR D'ASSEMBLAGE DE COMBUSTIBLE NUCLEAIRE**
HANDHABUNGSVORRICHTUNG ZUR HANDHABUNG EINES BEHÄLTERS FÜR KERNBRENNSTABBÜNDEL
DEVICE FOR HANDLING A CONTAINER FOR NUCLEAR FUEL ASSEMBLIES

(30) Priorité: 30.09.2008 FR 0856618
(43) Date de publication de la demande: 08.06.2011
(73) Titulaire: AREVA NP, 92400 Courbevoie (FR)
(72) Inventeur: WEGELER, Pierre, F-01800 Villieu (FR); GAUTHIER, Jacques, F-69270 Cailloux sur Fontaines (FR)
(74) Mandataire: Blot, Philippe Robert Emile
(86) Numéro de dépôt international: PCT/FR2009/051858
(87) Numéro de publication internationale: WO 2010/037971

(56) Documents cités:
- EP-A- 0 919 509
- EP-A1- 2 149 536
- DE-A1- 2 364 928
- DE-A1- 19 743 871
- DE-U1- 29 812 414
- JP-A- 6 286 971
- US-A- 4 286 722
- US-A- 4 373 755
- US-A- 4 451 198
- US-A- 4 557 515
- CASCADE CORPORATION: 'Non-Sideshifting/Sideshifting/ Revolving Clamps, Turnafork,(TM) Turnaload', [en ligne] no. 1809012-R0, 01 Janvier 1980, pages 1 - 18, XP007921722 19800101 Extrait de l'Internet: <URL:http://www.cascorp.com/web2/downloads. nsf/0/E8E7BAEF06D7DCBB882571E60059B268/$FIL E/1809012_Series4Op.pdf>

## Description

La présente invention concerne un ensemble de manutention pour conteneur d'assemblage de combustible nucléaire.

Les assemblages de combustible nucléaire subissent de nombreuses opérations de manutention au cours de leur vie.

En effet, les assemblages de combustible nucléaire neufs (ou non irradiés) sont généralement fabriqués sur un site de production, puis transportés jusqu'à une centrale nucléaire, où ils sont d'abord stockés puis insérés dans le coeur d'un réacteur nucléaire. Après plusieurs cycles d'irradiation, les assemblages usagés (ou irradiés) sont sortis du coeur, éventuellement stockés temporairement dans la centrale nucléaire, puis envoyés vers une usine de retraitement ou un site de stockage définitif.

Les assemblages de combustible sont généralement transportés dans des conteneurs spécifiques adaptés aux assemblages, neufs ou irradiés, à transporter. Chaque conteneur chargé d'un ou plusieurs assemblages de combustible est en général disposé à l'horizontale sur un véhicule, notamment un véhicule de transport routier et on transporte le conteneur d'un premier site (par exemple une usine de fabrication) à un second site (par exemple un magasin interrégional ou une centrale nucléaire) en utilisant si nécessaire des moyens intermodaux (transports routier, ferroviaire, maritime et/ou aérien).

Durant les phases de chargement / déchargement du véhicule de transport ou pour réaliser le chargement / déchargement de l'assemblage de combustible dans le conteneur lui-même, le conteneur est manutentionné en général en position horizontale. Le chargement / déchargement de l'assemblage transporté peut être réalisé en disposant le conteneur en position verticale. Il faut alors basculer le conteneur en position verticale pour le chargement / déchargement puis le remettre en position horizontale pour le transport.

Les conteneurs d'assemblages de combustible nucléaire, vides ou pleins, sont généralement lourds et encombrants, ce qui complique les opérations de manutention.

DE 197 43 871 A1 et EP 2 149 536 A1 divulguent des engins de manutentions permettant de faire pivoter la charge.

Un but de la présente invention est de proposer un ensemble de manutention pour conteneur d'assemblage de combustible nucléaire qui facilite la manutention des conteneurs d'assemblage de combustible nucléaire.

A cet effet, l'invention propose un ensemble de manutention pour conteneur d'assemblage de combustible nucléaire selon la revendication 1.

D'autres modes de réalisation de l'ensemble de manutention sont définis aux revendications 2 à 14.

L'invention et ses avantages seront mieux compris à la lecture de la description qui va suivre, donnée uniquement à titre d'exemple, et faite en se référant aux dessins annexés, sur lesquels :
- la figure 1 est une vue schématique en perspective d'un assemblage de combustible nucléaire ;
- la figure 2 est une vue en perspective d'un conteneur de transport pour assemblage de combustible muni de dispositifs de manutention conformes à l'invention ;
- les figures 3 et 4 sont des vues en perspectives du conteneur de la figure 2, illustrant deux modes de chargement / déchargement du conteneur ;
- la figure 5 est une vue illustrant un dispositif d'entreposage de conteneurs selon la figure 2 ;
- les figures 6 à 8 sont des vues en perspective d'un outil de levage conforme à l'invention pour un conteneur selon la figure 2, illustrant différentes configurations de levage et de basculement;
- la figure 9 est une vue schématique en perspective d'un dispositif de fixation utilisé dans l'ensemble de manutention ;
- la figure 10 est une vue en perspective d'un châssis de transport de plusieurs conteneurs selon la figure 2 ; et
- les figures 11 et 12 sont des vues de côté et de derrière d'un véhicule transportant des châssis selon la figure 10 et des conteneurs selon la figure 2 disposés sur les châssis.

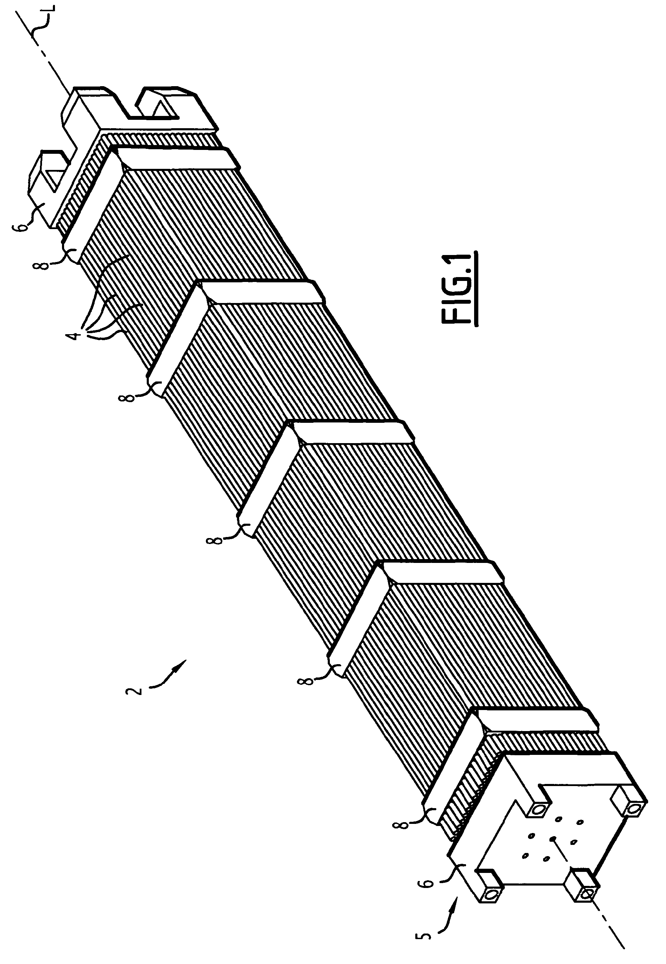

L'assemblage de combustible nucléaire 2 de la figure 1 est du type destiné à être utilisé dans les réacteurs nucléaires à eau légère pressurisée ou REP (en anglais Pressurized Water Reactor ou PWR).

L'assemblage 2 est allongé suivant une direction longitudinale L. Il comprend un faisceau de crayons 4 de combustible nucléaire, et une ossature 5 de support des crayons 4. L'assemblage 2 présente dans l'exemple illustré une section carrée.

Les crayons 4 se présentent sous la forme de tubes remplis de pastilles de combustible nucléaire et fermés à leurs extrémités par des bouchons.

L'ossature 5 comprend de manière classique deux embouts 6 disposés aux extrémités longitudinales de l'assemblage 2, des tubes-guides (non visibles) s'étendant longitudinalement entre les embouts 6, et des grilles 8 de maintien des crayons 4. Les tubes-guides sont fixés à leurs extrémités sur les embouts 6. Les grilles 8 sont fixées sur les tubes-guides et réparties entre les embouts 6. Les crayons 4 traversent les grilles 8 qui les maintiennent longitudinalement et transversalement.

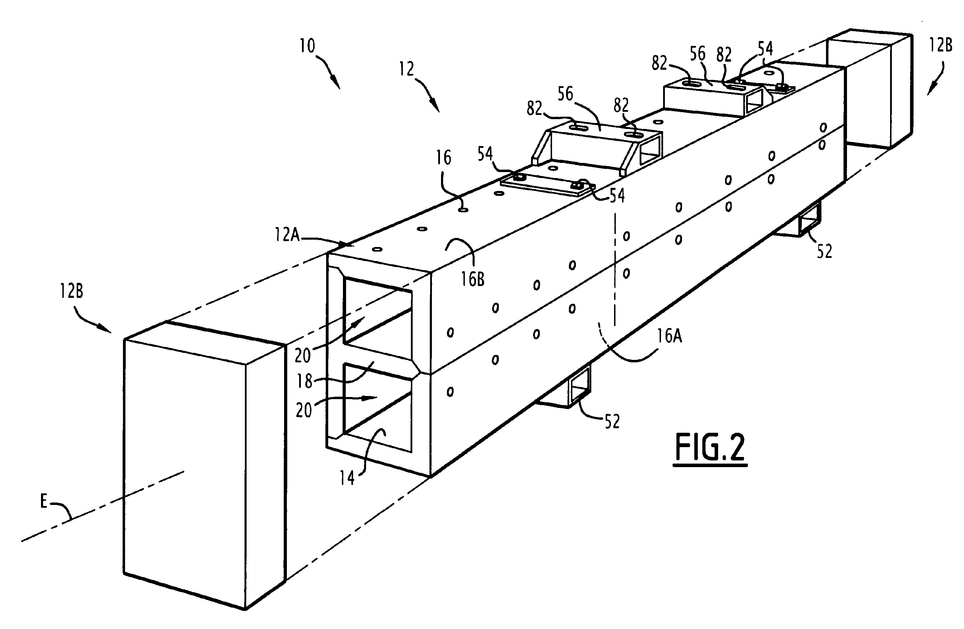

La figure 2 illustre un conteneur 10 muni de dispositifs de manutention conformes à l'invention, permettant de stocker et de transporter l'assemblage 2, par exemple d'un site de fabrication jusqu'à une centrale nucléaire.

Le conteneur 10 comprend une coque 12 de forme générale extérieure cylindrique et allongée longitudinalement suivant une direction longitudinale E. La coque 12 possède une surface interne 14 délimitant une cavité interne, et une surface externe 16.

Le conteneur 10 comprend une cloison 18 longitudinale séparant la cavité interne de la coque 12 en deux logements 20 individuels distincts et séparés. Chaque logement 20 est destiné à recevoir un assemblage 2 de combustible nucléaire tel que celui de la figure 1, et présente une section correspondante, ici une section carrée.

Les logements 20 s'étendent parallèlement de part et d'autre de la cloison 18, suivant la direction longitudinale E de la coque 12.

La coque 12 est réalisée en plusieurs parties. Elle comprend un corps tubulaire 12A et deux couvercles 12B pour fermer les extrémités longitudinales du corps 12A.

Le corps 12A de la coque 12 est formé de plusieurs parties de coque allongées suivant la direction longitudinale E. Plus précisément, le corps 12A est formé d'un support 36 à section en T, dont le pied est défini par la cloison 18 et deux portes 34 à section en L, réunies pour former le corps 12A.

Dans un mode de réalisation, les portes 34 sont fixées par vissage sur le support 36. Il est alors possible de charger le conteneur 10 en position horizontale, en retirant les portes 34, en disposant les assemblages 2 sur le support 36, puis en remettant en place les portes 34 et en les vissant sur le support 36.

Le conteneur 10 est apte à être stocké verticalement, en reposant sur un de ses couvercles 12B.

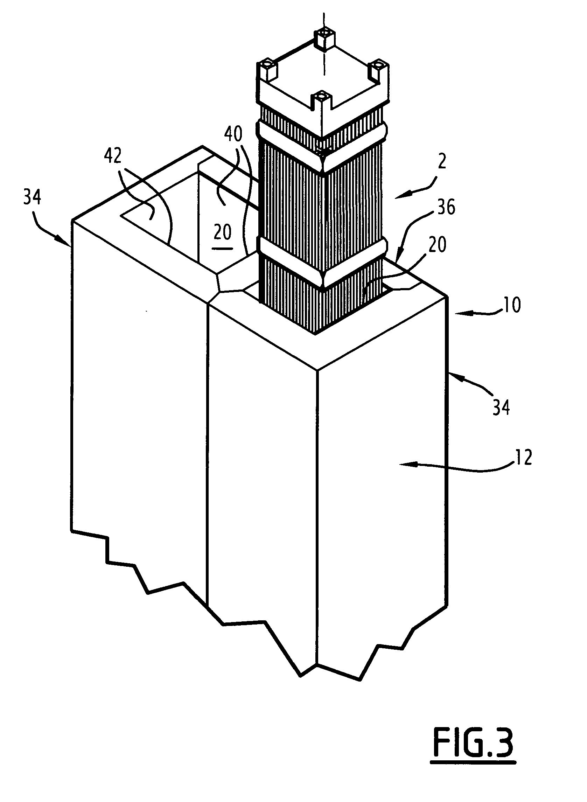

Tel que représenté sur la figure 3 le chargement ou déchargement d'un assemblage 2 peut être effectué en disposant le conteneur 10 en position verticale, le support 36 étant adossé à un mur ou à une structure de support, le couvercle 12B supérieur étant retiré, en saisissant l'assemblage 2 par son embout 6 supérieur, de manière connue avec une pince de levage appropriée, et en déplaçant l'assemblage 2 verticalement dans un des logements 20.

Ce mode de chargement ou de déchargement permet un gain de place important car il évite de stocker le conteneur 10 en position horizontale et un gain de temps important car il évite de déposer les portes 34 : seul le couvercle 12B supérieur est à déposer.

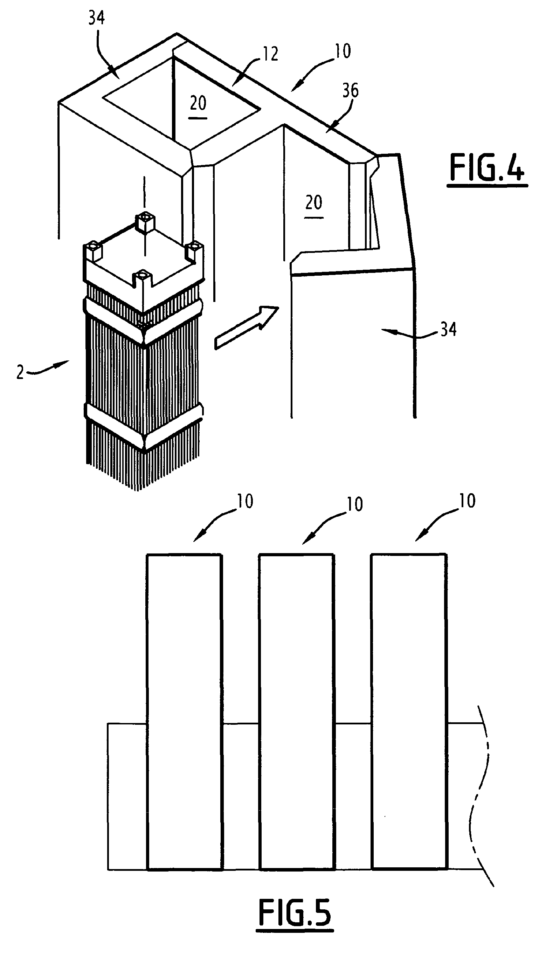

Dans une variante illustrée sur la figure 4, les portes 34 sont articulées sur le support 36, par l'intermédiaire de charnières, autour d'axes longitudinaux.

Il est alors possible de charger le conteneur 10 par le dessus, de la façon illustrée sur la figure 3, ou par le côté, de la façon illustrée sur la figure 4. Pour ce faire, le conteneur 10 étant disposé en position verticale et le couvercle 12B supérieur retiré, on désolidarise la porte 34 du couvercle 12B inférieur, puis on ouvre une porte 34 pour insérer ou retirer l'assemblage 2. Ce mode de chargement est plus adapté lorsque la hauteur du bâtiment est limitée.

Tel que représenté sur la figure 5, il est possible de prévoir dans une centrale nucléaire ou un site de production ou de stockage intermédiaire un dispositif de rangement du type râtelier, permettant d'entreposer une pluralité de conteneurs 10 verticalement les uns à côté des autres, avec un gain de place particulièrement important par rapport à un stockage en position horizontale et sans limitation de temps. En effet, avec un conteneur classique ne permettant qu'un stockage en position horizontale, la durée de stockage est limitée pour éviter un endommagement de l'assemblage de combustible 2 qui n'est pas conçu pour être stocké horizontalement.

Tel que représenté sur la figure 2, le conteneur 10 comprend des éléments d'appui et des éléments de fixation pour sa manutention et son transport.

Le conteneur 10 comprend deux pieds d'appui 52 tubulaires fixés transversalement sur une première face 16A de la surface externe 16 du conteneur 10. Les pieds 52 sont conçus pour permettre l'engagement et le blocage d'éléments de fixation installés sur le plateau de transport concerné (camion, wagon, conteneur maritime ou aérien) ou sur le conteneur ou la structure intermédiaire disposé en dessous du conteneur 10.

Le conteneur 10 comprend des dispositifs de fixation 54 fixés sur une deuxième face 16B de la surface extérieure 16 du conteneur 10 opposée à la première face 16A. Ces dispositifs de fixation 54 sont destinés à se fixer sur les pieds 52 d'un autre conteneur 10 empilé sur le conteneur 10 ou sur une structure intermédiaire.

Le conteneur 10 comprend sur la deuxième face 16B, des tubes 56 de réception de fourches d'un chariot élévateur pour permettre le levage du conteneur 10 et son placement sur un véhicule ou un wagon ou à l'inverse son déchargement. Ces tubes 56 sont aménagés pour recevoir des éléments de fixation d'un outil de manutention et permettre aussi la manutention du conteneur 10 par un moyen de levage adéquat (pont roulant, grue) et le chargement / déchargement vertical du plateau de transport.

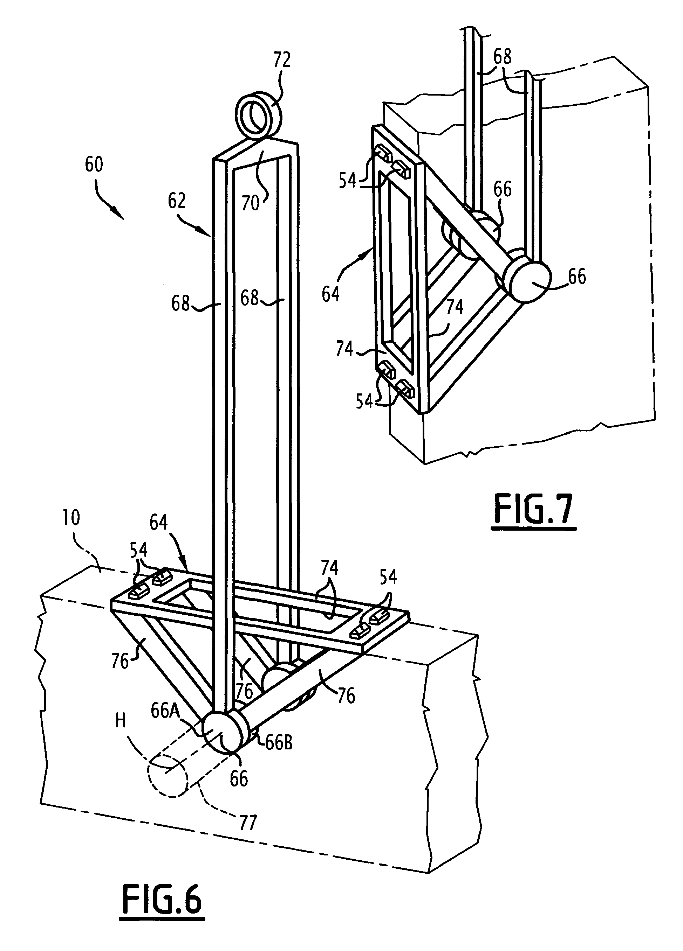

Tel que représenté sur les figures 6 à 8, un outil de levage 60 de l'ensemble de manutention permet la manutention du conteneur 10. L'outil de levage 60 est destiné à être suspendu, par exemple à un pont roulant.

L'outil de levage 60 comprend un support de levage 62 sous la forme d'un étrier et un élément de saisie 64 monté rotatif sur le support de levage 62 par l'intermédiaire d'articulations 66 du type pivot.

Le support de levage 62 comprend deux montants 68 reliés par une traverse supérieure 70 munie d'un anneau de suspension 72.

Les articulations 66 sont coaxiales et disposées aux extrémités inférieures des montants 68 opposées à la traverse supérieure 70. Les articulations 66 définissent un axe de rotation H, destiné à être horizontal lorsque l'outil de levage 60 est suspendu par l'anneau 72. L'axe de rotation H s'étend transversalement entre les extrémités inférieures des montants 68. L'axe de rotation H est par conception positionné au plus proche du centre de gravité du conteneur manutentionné.

L'élément de saisie 64 comprend deux faces opposées 74 portant chacune des dispositifs de fixation 54 permettent de fixer un conteneur 10 sur l'élément de saisie 64, comme cela sera décrit plus en détail par la suite.

L'outil de levage 60 comprend deux paires de bras 76 reliant l'élément de saisie 64 aux articulations 66. Les deux bras 76 de chaque paire sont disposés en V, et possèdent des extrémités éloignées fixées sur l'élément de saisie 64, et des extrémités adjacentes reliées aux articulations 66 correspondantes.

Chaque articulation 66 comprend une partie d'articulation fixe 66A fixée sur un montant 68, et une partie d'articulation mobile 66B fixée sur une paire de bras 76, et rotative par rapport à la partie d'articulation fixe 66A autour de l'axe de rotation H.

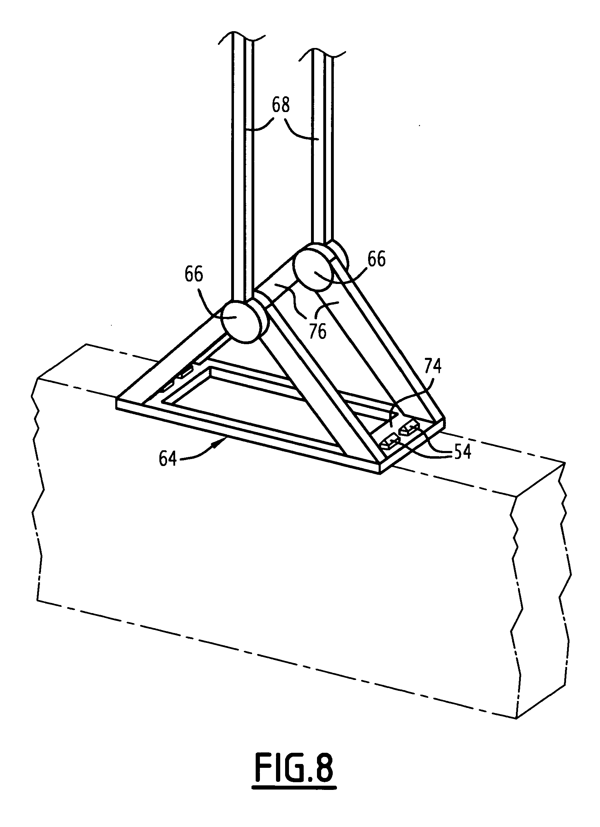

L'élément de saisie 64 est déplaçable en rotation autour de l'axe de rotation H par rapport au support de levage 62, entre 3 positions principales, une première position de levage à l'horizontale (figure 6) du conteneur 10, dans laquelle l'élément de saisie 64 est situé entre les montants 68, une deuxième position de levage à la verticale (figure 7) du conteneur 10, dans laquelle l'élément de saisie 64 est positionné verticalement et une troisième position de levage à l'horizontale (figure 8) du conteneur 10, dans laquelle l'élément de saisie 64 se situe sous les extrémités inférieures des montants 68 . L'élément de saisie 64 pivote au moins de 180° autour de l'axe de rotation H entre les deux positions extrêmes de levage à l'horizontale.

Dans chaque position de levage à l'horizontale, un conteneur 10 fixé sur l'élément de saisie 64 s'étend sensiblement horizontalement (sa direction longitudinale E est sensiblement orientée horizontalement).

Dans la position de levage à la verticale, un conteneur 10 fixé sur l'élément de saisie 64 s'étend sensiblement verticalement (sa direction longitudinale E est sensiblement orientée verticalement).

Les dispositifs de fixation 54 prévus sur les deux faces 74 permettent de fixer un conteneur 10 sous l'élément de saisie 64, dans l'une ou l'autre des positions de levage à l'horizontale.

L'écartement transversal entre les montants 68 est adapté pour permettre de recevoir un conteneur 10 entre les montants 68 dans la première position de levage à l'horizontale, et dans la position de levage à la verticale.

Dans la première position de levage à l'horizontale et dans la position de levage à la verticale, de préférence, l'axe de rotation H passe sensiblement par le centre de gravité du conteneur 10. Ceci facilite le passage de la première position de levage à l'horizontale à la position de levage à la verticale et vice-versa. Il en résulte que l'outil de levage 60 permet de déplacer facilement un conteneur 10 entre une position horizontale, pour le transport par exemple, et une position verticale, pour le chargement ou le déchargement de l'assemblage de combustible 2 pour ou le stockage sur un site de production, par exemple.

La deuxième position de levage à l'horizontale permet de saisir le conteneur 10 lorsqu'il n'y a pas la place pour passer les montants 68 de chaque côté du conteneur 10, par exemple parce qu'il est disposé trop proche d'un autre élément : mur, autre conteneur 10... Ceci permet un stockage compact des conteneurs 10, tout en permettant néanmoins leur manutention. L'élément de saisie 64 est par exemple disposé dans la deuxième position de levage à l'horizontale (figure 8) pour saisir et déplacer le conteneur 10 dans une zone dégagée, puis le conteneur 10 est relâché et l'élément de saisie 64 est retourné dans la première position de levage à l'horizontale, pour à nouveau saisir le conteneur 10 et pouvoir le manutentionner plus facilement, et par exemple le disposer en position verticale.

Avantageusement, les articulations 66 comprennent de manière classique des moyens de blocage en rotation de leurs parties 66A et 66B pour immobiliser en rotation l'élément de saisie 64 dans les différentes positions de levage. Ils sont libérables lorsque la rotation est souhaitée.

Le passage d'une position de levage à l'autre est effectué par exemple manuellement. Le passage manuel de la première position de levage à l'horizontale à la position de levage à la verticale avec un conteneur 10 est facilité lorsque le centre de gravité est porté par l'axe de rotation, car dans ce cas, la force nécessaire pour la rotation est faible.

Dans une variante, l'outil de levage 60 comprend au moins un actionneur d'entraînement en rotation de l'élément de saisie 64 par rapport au support de levage 62. Un tel moteur 77 est représenté en traits fantômes sur la figure 6.

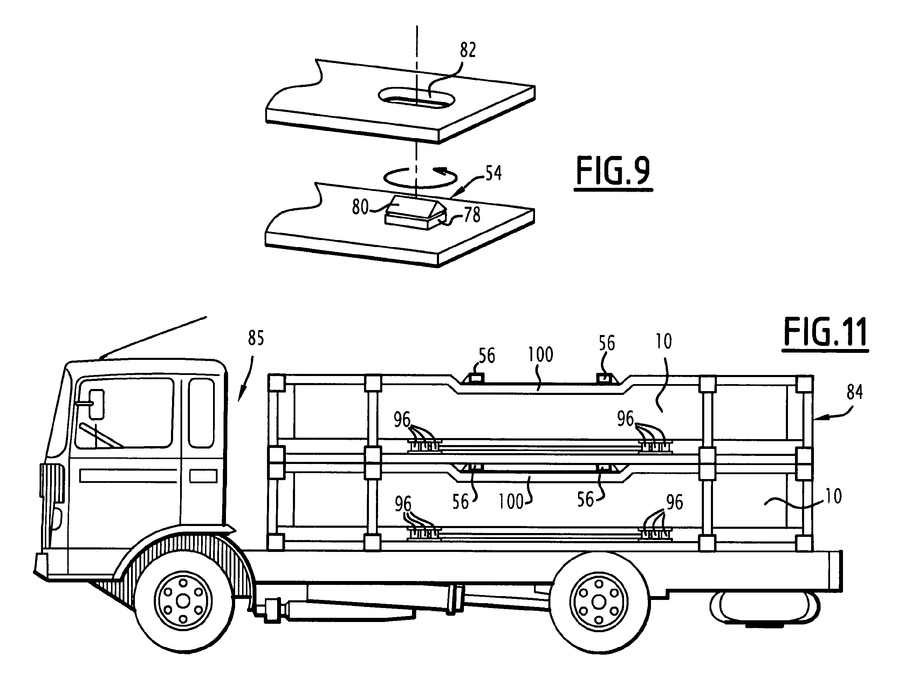

Tel que représenté sur la figure 9, de manière classique, un dispositif de fixation 54 est du type « quart de tour », et comprend une embase 78 fixe et un pion 80 monté rotatif sur l'embase 78. Le pion 80 présente une forme allongée perpendiculairement à l'axe de rotation. L'élément de fixation 54 est destiné à être inséré dans un orifice 82 oblong, puis pivoté de 90°, pour être empêché de sortir de l'orifice 82. Le mouvement de rotation des fixations 54 des traverses 94 du conteneur 10 ou de l'outil de levage 60 peut être provoqué manuellement ou peut être motorisé.

En revenant à la figure 2, les pieds 52 sont munis d'orifices 82 (non visibles) similaires pour coopérer avec les dispositifs de fixation 54 portés par exemple par la face 16B du conteneur 10 inférieur lorsque deux conteneurs 10 sont empilés. Les tubes 56 sont également munis d'orifices 82 pour coopérer avec les dispositifs de fixation 54 des deux faces 74 de l'élément de saisie 64 de l'outil de levage 60.

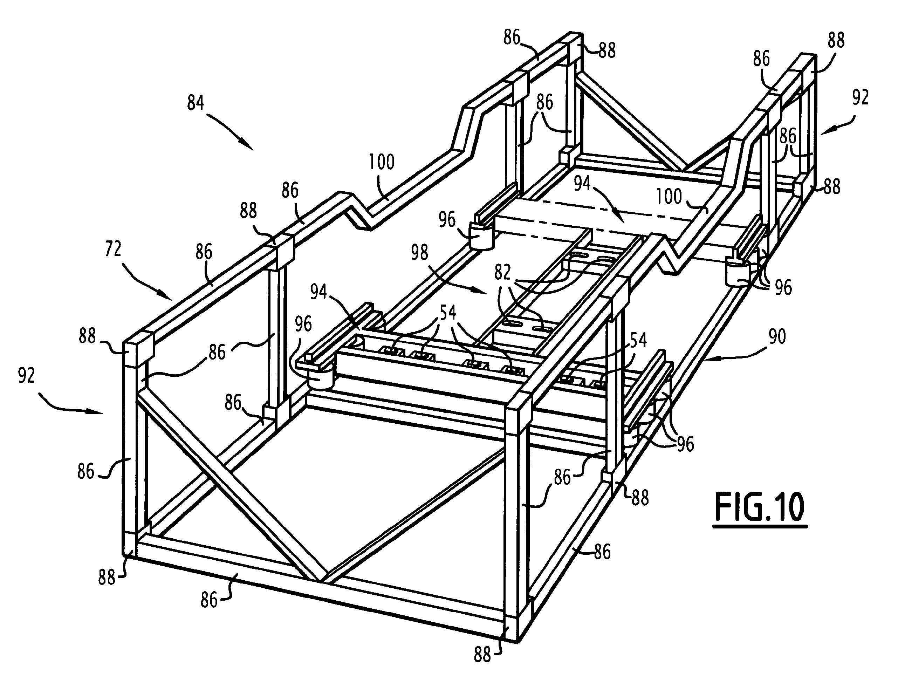

Tel que représenté sur la figure 10, l'ensemble de manutention comprend éventuellement un châssis 84 pour le transport d'un ou plusieurs conteneurs 10 par exemple sur un véhicule routier 85 (figure 11).

Le châssis 84 est « tubulaire », dans le sens où il est formé de tubes 86 reliés entre eux par des connecteurs 88.

Le châssis 84 comprend un berceau 90, des barrières latérales 92 s'étendant de chaque côté du berceau 90, et des traverses de support 94 en appui sur le berceau 90 par l'intermédiaire d'éléments de suspension et d'amortissement 96, tels que par exemple des blocs élastomères.

Les traverses 94 sont au nombre de deux. Leur écartement correspond à celui des pieds 52 (figure 2) d'un conteneur 10. Chaque traverse 94 porte plusieurs dispositifs de fixation 54 prévus pour coopérer avec les orifices 82 des pieds 52 pour fixer des conteneurs 10 sur les traverses 94.

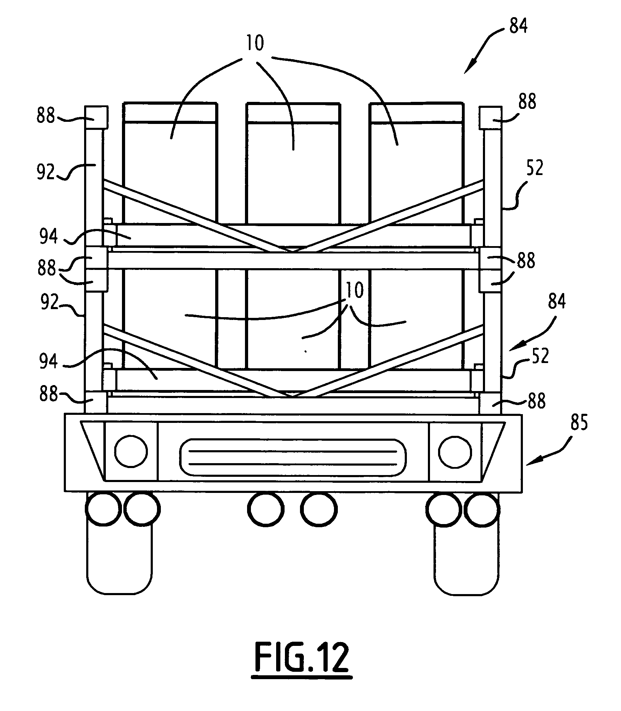

Le châssis 84 comprend une poutre de levage 98 s'étendant entre les traverses 94 et munie d'orifices 82 aptes à coopérer avec les dispositifs de fixation 54 de l'élément de saisie 64 pour permettre soit de lever le châssis 84 à l'aide de l'outil de levage 60, soit de lever uniquement l'ensemble poutre de levage 98 / traverses 94 après avoir déconnecté les éléments de suspensions 96, ceci afin d'atteindre les conteneurs 10 qui seraient disposés sur un deuxième châssis 84 placé dessous comme illustré sur les figures 11 et 12.

Tel que représenté sur les figures 11 et 12, le châssis 84 est apte à être disposé sur un plateau de chargement d'un véhicule par exemple routier 85. Pour faciliter la fixation du châssis 84 sur le véhicule 85, les connecteurs 88 sont du type de ceux utilisés pour la fabrication des conteneurs maritimes : un connecteur 88 présente une forme de boîte parallélépipédique, dont au moins certaines faces sont munies d'orifices de fixation, permettant de fixer deux connecteurs disposés côte à côte ou l'un sur l'autre.

Une fois le châssis 84 fixé sur le véhicule 85, les conteneurs 10 sont chargés et fixés à l'aide des dispositifs de fixation 52 et 82 du conteneur 10 et 54 du châssis 84. Les barrières 92 permettent d'empiler un second châssis 84 sur le premier et de charger et fixer des conteneurs 10 sur ce second châssis. Les deux châssis 84 sont alors fixés par l'intermédiaire de leurs connecteurs 88 adjacents. Il est également envisageable de charger et fixer directement les conteneurs l'un sur l'autre à l'aide de leurs dispositifs de fixation 52, 54, 82.

L'utilisation de connecteurs 88 du type de ceux utilisés pour la fabrication des conteneurs maritimes permet en outre de manutentionner directement le châssis 84 chargé de ses conteneurs 10. Ceci est particulièrement intéressant en cas d'utilisation de moyens intermodaux, les châssis chargés peuvent par exemple être directement chargés et fixés dans un conteneur maritime standard.

Comme cela est visible sur les figures 10 et 11, chaque barrière 92 présente un décrochement 100 permettant de passer les bras d'une fourche de chariot élévateur dans les tubes 56 d'un conteneur 10, pour lever le conteneur 10 par les tubes 56 sans utiliser l'outil de levage 60. Le châssis selon l'invention permet de manutentionner le conteneur 10 avec l'outil de levage ou avec un moyen de manutention plus classique fournissant ainsi une grande flexibilité à l'utilisateur qui peut adapter les outils employés selon leur disponibilité et l'environnement.

L'ensemble de manutention comprenant un outil de levage 60 facilite la manutention d'un conteneur 10 équipé des dispositifs de manutention 52, 54 et 56 et, et en particulier le passage du conteneur 10 d'une position horizontale à une position verticale, et inversement.

La manutention est facilitée par la compacité, et la légèreté, du conteneur 10.

Le conteneur 10 entreposable verticalement permet un stockage compact sans altération de l'assemblage de combustible nucléaire.

Le transport est également facilité. Le châssis 84 adapté pour recevoir plusieurs conteneurs 10, et apte à coopérer avec l'outil de levage 60, facilite encore le transport et la manutention. Le châssis 84 peut être muni d'éléments de suspension 96 permettant de préserver un assemblage 2 de combustible nucléaire neuf des vibrations lors du transport.

L'invention a été décrite à partir d'un conteneur 10 pour assemblage de combustible neuf pour réacteur à eau pressurisée ou REP (en anglais Pressurized Water Reactor ou PWR). L'invention s'applique à la manutention de tout type de conteneur d'assemblages 2 de combustible nucléaire neufs ou irradiés pour réacteur à eau légère ou REL (en anglais Light Water Reactor ou LWR), qu'ils soient à eau bouillante ou REB (en anglais Boiling Water Reactor ou BWR) ou à eau pressurisée.

L'invention a été décrite à partir d'un conteneur 10 pré-équipé des dispositifs de manutention 52, 54, 56. Elle s'applique à tout type de conteneur d'assemblages 2 de combustible nucléaire neufs ou irradiés après implantation de dispositifs de manutention 52, 54, 56 selon l'invention et mise en oeuvre d'un outil de levage selon l'invention, adapté aux dimensions et à la masse du conteneur concerné.

## Revendications

1. Ensemble de manutention pour conteneur d'assemblage (2) de combustible nucléaire, du type comprenant un outil de levage (60) du conteneur (10), l'outil de levage (60) comprenant un support de levage (62) destiné à être suspendu et un élément de saisie (64) de conteneur (10) comprenant des dispositifs (54) de fixation amovible du conteneur (10) sur l'élément de saisie (64), l'élément de saisie (64) étant monté rotatif sur le support de levage (62) autour d'un axe de rotation (H) sensiblement horizontal lorsque le support de levage (62) est suspendu,
l'élément de saisie (64) étant deplaçable par rotation autour de l'axe de rotation (H) par rapport au support de levage (62) dans une position de levage à la verticale permettant de maintenir un conteneur (10) saisi par l'élément de saisie (64) sensiblement vertical lorsque le support de levage (62) est suspendu.

2. Ensemble de manutention selon la revendication 1, dans lequel l'élément de saisie (64) est déplaçable par rapport au support de levage (62) par rotation autour de l'axe de rotation (H) dans au moins une position de levage à l'horizontale permettant de maintenir un conteneur (10) saisi par l'élément de saisie (64) sensiblement horizontal lorsque le support de levage (62) est suspendu.

3. Ensemble de manutention selon la revendication 2, dans lequel l'élément de saisie (64) est déplaçable par rapport au support de levage (62) par rotation autour de l'axe de rotation (H) dans deux positions de levage à l'horizontale permettant de maintenir un conteneur (10) sous l'élément de saisie (64) à deux hauteurs différentes par rapport au support de levage.

4. Ensemble de manutention selon la revendication 2 ou 3, dans lequel l'élément de saisie (64) est déplaçable par rapport au support de levage (62) par rotation autour de l'axe de rotation (H) dans une position de levage à l'horizontale, dans laquelle l'axe de rotation s'étend au travers du conteneur (10), de préférence à proximité du centre de gravité du conteneur (10).

5. Ensemble de manutention selon la revendication 2, 3 ou 4, dans lequel l'élément de saisie (64) est déplaçable par rapport au support de levage (62) par rotation autour de l'axe de rotation (H) dans une position de levage à l'horizontale, dans laquelle l'axe de rotation s'étend au-dessus du conteneur (10).

6. Ensemble de manutention selon la revendication 5, dans lequel, dans la position de levage à l'horizontale, le conteneur (10) est disposé sous le niveau d'extrémités inférieures de montants (68) du support de levage (62) en forme d'étrier.

7. Ensemble de manutention selon les revendications 5 et 6 combinées, dans lequel l'élément de saisie (64) pivote de 180° autour de l'axe de rotation entre la première position de levage à l'horizontale et la deuxième position de levage à l'horizontale.

8. Ensemble de manutention selon l'une quelconque des revendications précédentes, dans lequel le support de levage (62) présente une forme d'étrier et comprend deux montants (68) sensiblement verticaux lorsque le support de levage (62) est suspendu, aptes à recevoir le conteneur (10) entre eux.

9. Ensemble de manutention selon la revendication 8, dans lequel l'élément de saisie (64) est relié à chaque montant (68) par deux bras (76) disposés en V se rejoignant à une articulation (66) sur le montant (68), et s'éloignant en direction de l'élément de saisie (64).

10. Ensemble de manutention selon l'une quelconque des revendications précédentes, comprenant un châssis (84) de transport de plusieurs conteneurs (10) disposés côte à côte.

11. Ensemble de manutention selon la revendication 10, dans lequel le châssis (84) comprend un berceau (90) et des traverses (94) de support des conteneurs (10) reliées au berceau (90) par des suspensions (96).

12. Ensemble de manutention selon la revendication 10 ou 11, dans lequel l'élément de saisie (64) et le châssis (84) sont adaptés pour permettre de lever le châssis (84) à l'aide de l'élément de saisie (64).

13. Ensemble de manutention selon l'une quelconque des revendications 10 à 12, dans lequel le châssis (84) comprend des barrières latérales (92) munies de décrochements (100) permettant le passage d'une fourche de chariot élévateur en vue de charger ou décharger un conteneur (10) dans le châssis (84).

14. Ensemble de manutention selon l'une quelconque des revendications 10 à 13, dans lequel le châssis (84) comprend des éléments de châssis (86) reliés par des connecteurs (88) permettant la manutention du châssis (84) chargé d'au moins un conteneur (10).

## Patentansprüche

1. Handhabungseinheit für einen Behälter für Kernbrennstabbündel (2) des Typs, der ein Hebewerkzeug (60) für den Behälter (10) aufweist, wobei das Hebewerkzeug (60) eine zum Aufhängen bestimmte Hebehalterung (62) und ein Greiferelement (64) für den Behälter (10) mit Vorrichtungen (54) zur lösbaren Befestigung des Behälters (10) am Greiferelement (64) aufweist, wobei das Greiferelement (64) an der Hebehalterung (62) um eine im Wesentlichen horizontale Drehachse (H) drehbar angebracht ist, wenn die Hebehalterung (62) aufgehängt ist,
wobei das Greiferelement (64) durch eine Drehung um die Drehachse (H) in Bezug auf die Hebehalterung (62) in einer vertikalen Hubposition verlagerbar ist, wodurch es ermöglicht wird, einen vom Greiferelement (64) ergriffenen Behälter (10) im Wesentlichen vertikal zu halten, wenn die Hebehalterung (62) aufgehängt ist.

2. Handhabungseinheit nach Anspruch 1, bei der das Greiferelement (64) in Bezug auf die Hebehalterung (62) durch Drehung um die Drehachse (H) in mindestens einer horizontalen Hubposition verlagerbar ist, wodurch es ermöglicht wird, den durch das Greiferelement (64) ergriffenen Behälter (10) im Wesentlichen horizontal zu halten, wenn die Hebehalterung (62) aufgehängt ist.

3. Handhabungseinheit nach Anspruch 2, bei der das Greiferelement (64) in Bezug auf die Hebehalterung (62) durch Drehung um die Drehachse (H) in zwei horizontalen Hubpositionen verlagerbar ist, wodurch es ermöglicht wird, den Behälter (10) unter dem Greiferelement (64) auf zwei unterschiedlichen Höhen in Bezug auf die Hebehalterung zu halten.

4. Handhabungseinheit nach Anspruch 2 oder 3, bei der das Greiferelement (64) in Bezug auf die Hebehalterung (62) durch Drehung um die Drehachse (H) in einer horizontalen Hubposition verlagerbar ist, in der sich die Drehachse, vorzugsweise in der Nähe des Schwerpunkts des Behälters (10), quer zum Behälter (10) erstreckt.

5. Handhabungseinheit nach Anspruch 2, 3 oder 4, bei der das Greiferelement (64) in Bezug auf die Hebehalterung (62) durch Drehung um die Drehachse (H) in einer horizontalen Hubposition verlagerbar ist, in der sich die Drehachse über dem Behälter (10) erstreckt.

6. Handhabungseinheit nach Anspruch 5, bei der in der horizontalen Hubposition der Behälter unter dem Niveau unterer Enden von Streben (68) der Hebehalterung (62) in Bügelform angeordnet ist.

7. Handhabungseinheit nach den zusammengefassten Ansprüchen 5 und 6, bei der das Greiferelement (64) zwischen der ersten horizontalen Hubposition und der zweiten horizontalen Hubposition 180° um die Drehachse schwenkt.

8. Handhabungseinheit nach einem der vorhergehenden Ansprüche, bei der die Hebehalterung (62) eine Bügelform aufweist und zwei im Wesentlichen vertikale Streben (68) hat, wenn die Hebehalterung (62) aufgehängt ist, die den Behälter (10) zwischen sich aufnehmen können.

9. Handhabungseinheit nach Anspruch 8, bei der das Greiferelement (64) mit jeder Strebe (68) durch zwei in V-Form angeordnete Arme (76) verbunden ist, die in einer Anlenkung (66) an der Strebe (68) aufeinandertreffen und sich in Richtung des Greiferelements (64) voneinander entfernen.

10. Handhabungseinheit nach einem der vorhergehenden Ansprüche, ein Fahrgestell (84) zum Transport mehrerer Seite an Seite angeordneter Behälter (10) umfassend.

11. Handhabungseinheit nach Anspruch 10, bei der das Fahrgestell (84) ein Einschubgestell (90) und Querstreben (94) zur Halterung der Behälter (10) hat, die durch Aufhängungen (96) mit dem Einschubgestell (90) verbunden sind.

12. Handhabungseinheit nach Anspruch 10 oder 11, bei der das Greiferelement (64) und das Fahrgestell (84) dazu angepasst sind, das Fahrgestell (84) mit Hilfe des Greiferelements (64) anzuheben.

13. Handhabungseinheit nach einem der Ansprüche 10 bis 12, bei der das Fahrgestell (84) Seitensicherungen (92) hat, die mit Ausnehmungen (100) versehen sind, die den Durchtritt einer Hubwagengabel im Hinblick darauf ermöglichen, einen Behälter (10) auf das Fahrgestell (84) auf- oder davon abzuladen.

14. Handhabungseinheit nach einem der Ansprüche 10 bis 13, bei der das Fahrgestell (84) Fahrgestellelemente (86) hat, die mittels Verbindern (88) verbunden sind, wodurch die Handhabung des mit mindestens einem Behälter (10) beladenen Fahrgestells (84) ermöglicht wird.

## Claims

1. Handling system for a container for nuclear fuel assembly (2), of the type comprising a tool (60) for lifting the container (10), wherein the lifting tool (60) comprises a lifting carrier (62) to be suspended and a member (64) for gripping the container comprising removable devices (54) for fastening the container (10) onto the gripping member (64), wherein the gripping member (64) is mounted so that it may rotate on the lifting carrier (62) about a substantially horizontal rotation axis (H) when the lifting carrier (62) is suspended,
the gripping member (64) being movable by rotation around the axis of rotation (H) with respect to the lifting carrier (62) in a vertical lifting position permitting a container (10) to be held by the gripping member (64) substantially vertically when the lifting carrier (62) is suspended.

2. Handling system according to claim 1, in which the gripping member (64) is movable with respect to the lifting carrier (62) by rotation around the axis of rotation (H) in at least one horizontal lifting position permitting a container (10) to be held by the gripping member (64) substantially horizontally when the lifting carrier (62) is suspended.

3. Handling system according to claim 2, in which the gripping member (64) is movable with respect to the lifting carrier (62) by rotation around the axis of rotation (H) in two horizontal lifting positions permitting a container (10) to be held by the gripping member (64) at two different heights with respect to the lifting carrier.

4. Handling system according to claims 2 or 3, in which the gripping member (64) is movable with respect to the lifting carrier (62) by rotation around the axis of rotation (H) in a horizontal lifting position, in which the axis of rotation extends through the container (10), preferably close to the centre of gravity of the container (10).

5. Handling system according to claims 2, 3 or 4, in which the gripping member (64) is movable with respect to the lifting carrier (62) by rotation around the axis of rotation (H) in a horizontal lifting position in which the axis of rotation extends above the container (10).

6. Handling system according to claim 5, in which in the horizontal lifting position, the container (10) is positioned below the level of lowers ends of I bars (68) of a stirrup-shaped lifting carrier (62).

7. Handling system according to claims 5 and 6 combined, in which in the gripping member (64) pivots 180° around the axis of rotation between the first horizontal lifting position and the between the second horizontal lifting position.

8. Handling system according to any of the previous claims, in which the lifting carrier (62) is stirrup shaped and comprises two bars (68) that are substantially vertical when the lifting carrier (62) is suspended, that can accommodate the container (10) between them.

9. Handling system according to claim 8, in which the gripping member (62) is joined to each bar (68) by two arms (76) positioned in a V shaped layout which are joined at an articulation (66) on the bar (68), and which separate in the direction of the gripping member (64).

10. Handling system according to any of the previous claims, comprising a transport chassis (84) for several containers (10) placed side by side.

11. Handling system according to claim 10, in which the chassis (84) comprises a cradle (90) and transversal bars (94) to support the containers (10) joined to the cradle (90) by suspensions (96).

12. Handling system according to claims 10 or 11, in which the gripping member (64) and the chassis (84) are adapted to allow the chassis (84) to be lifted using the gripping member (64).

13. Handling system according to claims 10 to 12, in which the chassis (84) comprises lateral barriers (92) with setbacks (100) to allow the forks of a fork lift truck to pass so that a container (10) may be loaded or unloaded from the chassis (84).

14. Handling system according to claims 10 to 13, in which the chassis (84) comprises chassis members (86) joined by connectors (88) which allow the chassis (84) loaded with at least one container (10) to be handled.
